# EUROPEAN PATENT APPLICATION

(11) **EP 2 237 564 A1**
(43) Date of publication of application: **06.10.2010**
(21) Application number: 09178864.6
(22) Date of filing: 11.12.2009
(51) Int. Cl.: H04N 9/31

(54) **Display method for determining attribute of image to be projected, according to user's manipulation on image projection screen, and display apparatus using the same**

(30) Priority: 03.04.2009 KR 20090029105
(71) Applicant: Samsung Electronics Co., Ltd., Suwon-si, Gyeonggi-do 442-742 (KR)
(72) Inventor: Ryu, Hee-seob, Gyeonggi-do (KR); Park, Seung-kwon, Gyeonggi-do (KR); Lea, Jong-ho, Gyeonggi-do (KR); Jang, Jong-hyuk, Gyeonggi-do (KR)
(74) Representative: Land, Addick Adrianus Gosling

(57) **Abstract**

A display method for determining an attribute of an image to be projected, according to a manipulation performed by a user on an image projection surface, and a display apparatus using the display method are provided. The display method includes determining an attribute of an image to be projected, according to a manipulation performed by a user on a predetermined object onto which the image is to be projected. Therefore, it is possible to set and/or change the attribute of the image, such as the location and size of a projected image, more conveniently and intuitively.

## Description

This application claims priority from Korean Patent Application No. 10-2009-0029105, filed on April 3, 2009, in the Korean Intellectual Property Office, the disclosure of which is incorporated herein by reference in its entirety.

Apparatuses and methods consistent with the present invention relate to a display method and a display apparatus using the same, and more particularly, to a display method for generating an image and projecting the generated image onto an object such as a screen in order for a user to view the image, and a display apparatus using the same.

Projectors which are capable of providing large-sized images are equipped with inexpensive and relatively simple facilities, and have been widely used in conference room presentations. Recently, since users desire to watch movies through large-sized screens, projectors have become widespread for home use.

The biggest advantage of projectors is that users can freely change the location and size of images projected by projectors. However, to change the location and size of projected images, users need to adjust the direction and zoom ratio of projectors.

In other words, although projectors enable users to freely change the location and size of projected images, they still cannot enable users to freely manipulate projectors.

Therefore, there is a need for methods which enable users to set and/or change the location and size of projected images more conveniently and intuitively.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The exemplary embodiments of the present invention provides a display method which determines an attribute of an image to be projected, according to a user's manipulation on an image projection surface aimed at setting and/or changing the attribute of the image, such as the location and size of a projected image, more conveniently and intuitively, and a display apparatus using the display method.

According to an aspect of the present invention, there is provided a display method comprising determining an attribute of an image to be projected, according to a manipulation performed by a user on a predetermined object onto which the image is to be projected, and projecting the image based on the determined attribute.

The determining may comprise determining at least one of a location, a form, a size, a ratio, a shape, a brightness and a focus of the image according to the manipulation.

The determining may comprise at least one of the following types of determining: 1) determining a point specified by the user to be a center of the image to be projected; 2) determining a point specified by the user to be an edge of the image to be projected; 3) determining a shape specified by the user so that the image having the shape is projected; 4) determining an area, which has a point specified by the user and is distinguished from other areas, to be an area onto which the image is to be projected; and 5) determining a ratio set by the user to be a ratio of the image to be projected.

The manipulation may be performed by the user using a beam emitted from a pointer onto the predetermined object.

The predetermined object may be at least one of a screen and an inside wall of a building.

The display method may further comprise acquiring surface state information associated with a surface of a portion of the predetermined object onto which the image is to be projected. The projecting may comprise generating an image in conformity with the determined attribute, processing the generated image based on the surface state information, and projecting the processed image.

The processing of the image may comprise color compensation and geometric compensation.

According to another aspect of the present invention, there is provided a display apparatus comprising a recognizer which determines an attribute of an image to be projected, according to a manipulation performed by a user on a predetermined object onto which the image is to be projected, a generator which generates an image in conformity with the attribute determined by the recognizer, and a projecting unit which projects the image generated by the generator.

The recognizer may determine at least one of a location, a form, a size, a ratio, a shape, a brightness and a focus of the image according to the manipulation.

The recognizer may determine the attribute of the image by at least one of the following types of determining: 1) determining a point specified by the user to be a center of the image to be projected; 2) determining a point specified by the user to be an edge of the image to be projected; 3) determining a shape specified by the user so that the image having the shape is projected; 4) determining an area, which has a point specified by the user and is distinguished from other areas, to be an area onto which the image is to be projected; and 5) determining a ratio set by the user to be a ratio of the image to be projected.

The manipulation may be performed by the user using a beam emitted from a pointer onto the predetermined object.

The predetermined object may be at least one of a screen and an inside wall of a building.

The recognizer may acquire surface state information associated with a surface of a portion of the predetermined object onto which the image is to be projected. The generator may generate an image in conformity with the determined attribute, and process the generated image based on the surface state information acquired by the recognizer.

The image processing performed by the generator may comprise color compensation and geometric compensation.

According to another aspect of the present invention, there is provided a display method comprising projecting an image onto a predetermined object, changing an attribute of the image according to a manipulation performed by a user on the predetermined object, and projecting the image based on the changed attribute.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a block diagram of a projector according to an exemplary embodiment of the present invention;

FIG. 2 is a flowchart provided to explain a process of setting an attribute of an image according to a user's pointing manipulation prior to image projection;

FIGS. 3 to 5 are views provided to specifically explain operation S230 of FIG. 2;

FIG. 6 is a flowchart provided to explain a process of changing an attribute of an image according to a user's pointing manipulation during image projection; and

FIG. 7 is a view provided to specifically explain operation S640 of FIG. 6.

### DETAILED DESCRIPTION OF EXEMPLARY EMBODIMENTS

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

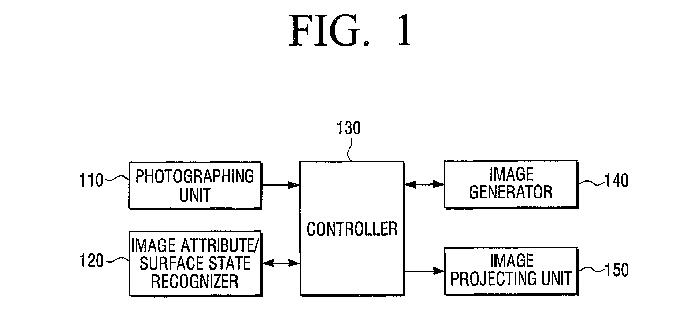

FIG. 1 is a block diagram of a projector according to an exemplary embodiment of the present invention. A projector is a kind of display apparatus capable of projecting an image onto a screen so that a user may view the projected image.

The projector according to the exemplary embodiment of the present invention may determine an attribute of an image to be projected, according to a pointing manipulation performed by a user on a screen onto which the image is to be projected, and may project the image onto the screen in conformity with, i.e., according to, the determined attribute.

As shown in FIG. 1, the projector according to the exemplary embodiment of the present invention comprises a photographing unit 110, an image attribute/surface state recognizer 120, a controller 130, an image generator 140 and an image projecting unit 150.

The photographing unit 110 photographs an image projection area onto which the projector projects an image, and an area neighboring the image projection area. For example, if an image is projected onto a screen, the photographing unit 110 may photograph the screen.

The screen displays not only an image projected by the projector but also a beam emitted from a pointer of a user. Accordingly, the photographing unit 110 may photograph the user's pointing manipulation, as well as the image projected by the projector.

The image attribute/surface state recognizer 120 determines whether or not a user performs a pointing manipulation to set and/or change an attribute of the image to be projected, based on a photographing result obtained by the photographing unit 110. Herein, the attribute of the image refers to the location, size and form of an image to be projected onto a screen.

Additionally, the image attribute/surface state recognizer 120 sets and/or changes the attribute of the image to be projected, in response to the pointing manipulation performed by the user.

The image attribute/surface state recognizer 120 acquires surface state information of an image projection portion of the screen onto which an image is to be projected. To acquire the surface state information, the image attribute/surface state recognizer 120 may extract the image projection portion from the image photographed by the photographing unit 110, and may analyze the extracted portion.

The image generator 140 generates an image in conformity with the attribute determined by the image attribute/surface state recognizer 120. Additionally, the image generator 140 processes the generated image, based on the surface state information acquired by the image attribute/surface state recognizer 120.

The image projecting unit 150 projects the image output from the image generator 140 onto the screen.

The controller 130 controls the above-described elements so that the projector may perform operations corresponding to user commands.

Additionally, the controller 130 transfers data between the elements. In more detail, the controller 130: 1) transfers the photographing result obtained by the photographing unit 110 to the image attribute/surface state recognizer 120, 2) transfers information regarding the attribute of the image and the surface state information recognized by the image attribute/surface state recognizer 120 to the image generator 140, and 3) transfers the image generated by the image generator 140 to the image projecting unit 150.

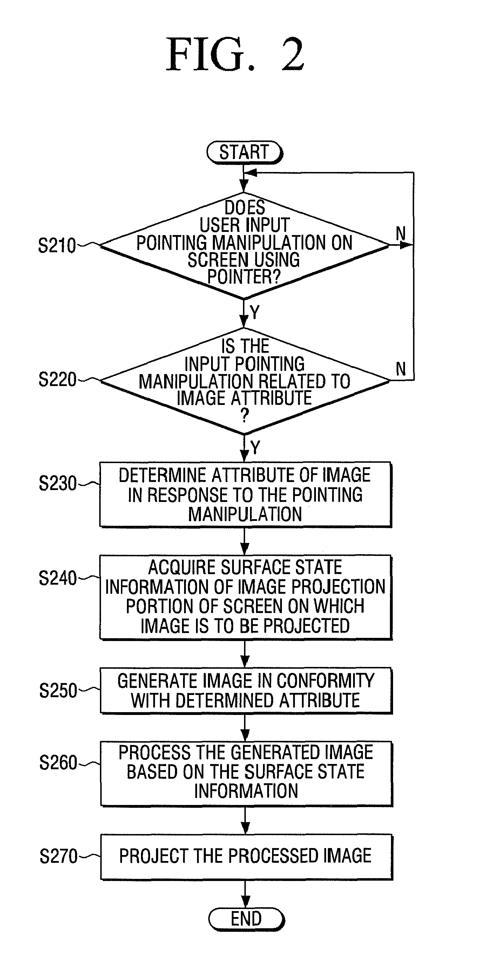

Hereinafter, a process by which the above-described projector of FIG. 1: 1) determines an attribute of an image to be projected onto the screen according to the pointing manipulation performed by the user on the screen, and 2) projects the image onto the screen in conformity with the determined attribute, is described in detail with reference to FIG. 2.

In FIG. 2, the image attribute/surface state recognizer 120 determines whether or not a user inputs the pointing manipulation on the screen using a pointer (S210). In more detail, the image attribute/surface state recognizer 120 determines whether or not a beam emitted from the pointer of the user is shown on the image photographed by the photographing unit 110.

Upon determining that the beam is shown on the image photographed by the photographing unit 110, the image attribute/surface state recognizer 120 determines that the user inputs the pointing manipulation on the screen using the pointer. On the other hand, upon determining that there is no beam on the image photographed by the photographing unit 110, the image attribute/surface state recognizer 120 determines that the user does not input the pointing manipulation on the screen using the pointer.

If it is determined that the user inputs the pointing manipulation on the screen (S210-Y), the image attribute/surface state recognizer 120 determines whether or not the input pointing manipulation is related to the image attribute (S220). Herein, the image attribute refers to the location, size and form of the image to be projected onto the screen, as described above.

If it is determined that the pointing manipulation is related to the image attribute (S220-Y), the image attribute/surface state recognizer 120 determines the attribute of the image to be projected, in response to the pointing manipulation (S230).

For example, if the user specifies a predetermined point using the pointer, the image attribute/surface state recognizer 120 may determine the point specified by the user as the center of the image to be projected.

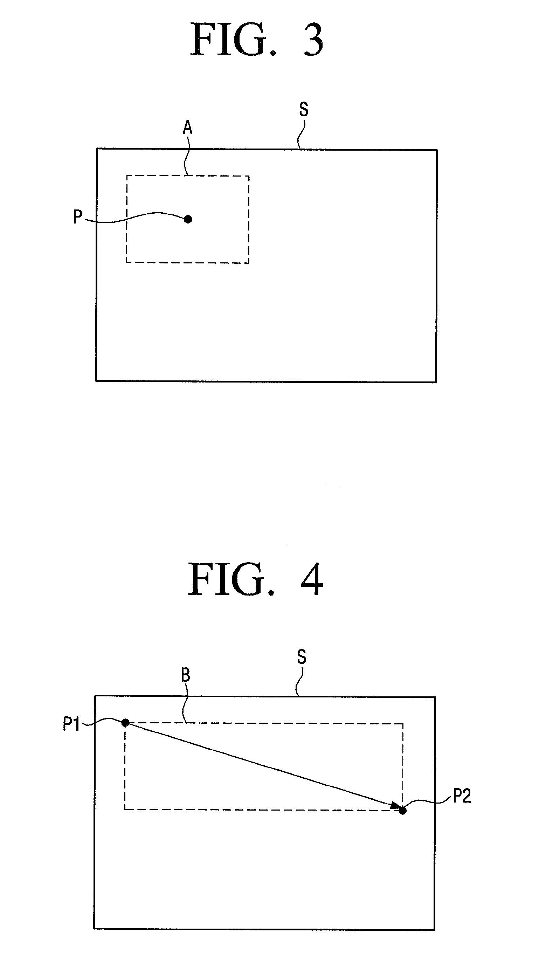

FIG. 3 diagrammatically illustrates screen S on which point P specified by the user is determined to be the center of image A to be projected. In other words, the 'location' of the image to be projected may be determined through the user's pointing manipulation.

Additionally, if the user draws a straight line on the screen using the pointer, the image attribute/surface state recognizer 120 may determine the straight line specified by the user as a diagonal line of the image to be projected.

FIG. 4 diagrammatically illustrates screen S on which a straight line specified by the user to connect point P1 to point P2 is determined to be a diagonal line of image B to be projected. In other words, the 'size' of the image to be projected may be determined through the user's pointing manipulation.

Alternatively, if the user draws a predetermined figure on the screen using the pointer, the image attribute/surface state recognizer 120 may determine the figure specified by the user as the form of the image to be projected.

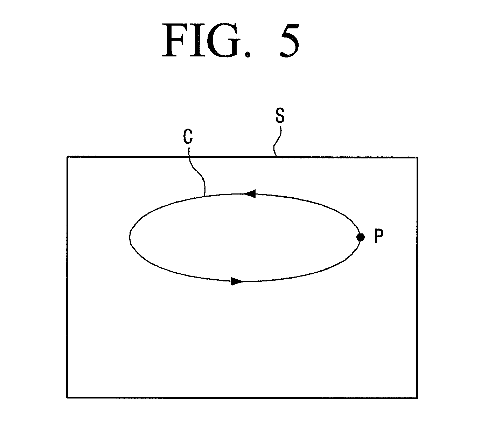

FIG. 5 diagrammatically illustrates screen S on which an oval specified by the user is determined to be the form of image C to be projected. In other words, the 'form' of the image to be projected may be determined through the user's pointing manipulation.

After operation S230, the image attribute/surface state recognizer 120 acquires surface state information of an image projection portion of the screen onto which an image is to be projected (S240).

The image projection portion of the screen is determined through operation S230 described above. In other words, the image projection portion may display dotted line 'A' of FIG. 3, dotted line 'B' of FIG. 4 and solid line 'C' of FIG. 5. Additionally, the surface state information may be acquired by extracting the image projection portion from the image photographed by the photographing unit 110 and analyzing the extracted portion.

Subsequently, the image generator 140 generates an image in conformity with the attribute determined in operation S230 (S250). In more detail, the image may be generated in conformity with the location, size and form determined in operation S230.

Next, the image generator 140 processes the image generated in operation S250 based on the surface state information acquired in operation S240 (S260). Image processing in operation S260 may comprise color compensation and geometric compensation.

Color compensation may be performed in order to eliminate a phenomenon in which an image seems to appear as if it is distorted due to colors or patterns of an area onto which the image is to be projected. Additionally, geometric compensation may be performed in order to eliminate a phenomenon in which an image seems to appear as if it is distorted due to the form of an area onto which the image is to be projected.

The projector projects an image onto the screen in the exemplary embodiment of the present invention, but there is no limitation to the screen. Accordingly, it is possible for the projector to project an image onto an inside wall of a building rather than onto the screen. When the image is projected onto the inside wall of the building, image compensation of operation S260 may be effectively performed.

In particular, color compensation may be useful in projecting an image onto an inside wall of a building to which a patterned wallpaper is attached. Geometric compensation may be useful in projecting an image onto an area having a bent portion formed by two walls or a bent portion formed by a wall and a ceiling.

After operation S260, the image projecting unit 150 projects the processed image onto the screen (S270). Accordingly, it is possible to provide a user with an image which matches the attribute determined by the user and in which a distortion due to the surface state is compensated.

The process by which the user pre-sets the attribute of the image through the pointing manipulation prior to projecting the image onto the screen has been described in detail according to the exemplary embodiment of the present invention.

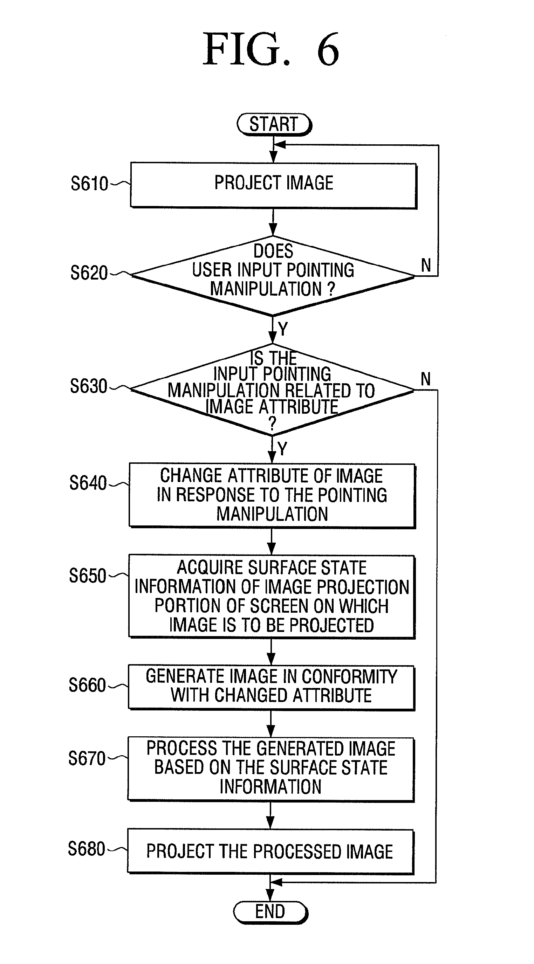

Hereinafter, a process by which the user changes the attribute of the image through the pointing manipulation during the image projection is described in detail with reference to FIG. 6.

As shown in FIG. 6, while the image projecting unit 150 projects an image (S610), if it is determined that a user inputs a pointing manipulation on the screen (S620-Y), the image attribute/surface state recognizer 120 determines whether or not the input pointing manipulation is related to the image attribute (S630). Herein, the image attribute refers to the location, size and form of the image to be projected onto the screen, as described above.

If it is determined that the input pointing manipulation is related to the image attribute (S630-Y), the image attribute/surface state recognizer 120 changes the attribute of the currently projected image, in response to the pointing manipulation (S640).

For example, if a user drags an edge of the image displayed on the screen to another point through the pointing manipulation, the image attribute/surface state recognizer 120 may change the edge of the image to the point specified by the user.

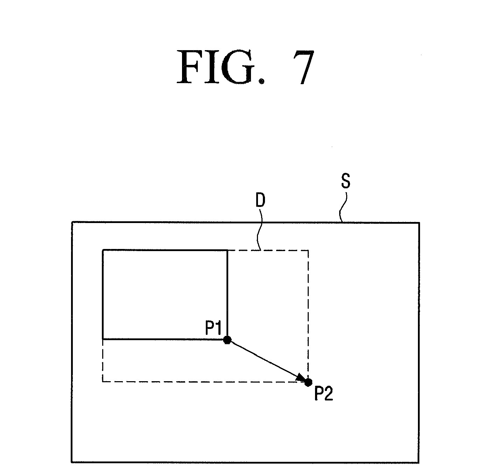

FIG. 7 diagrammatically illustrates screen S on which point P1 is changed to point P2, which is placed in lower right corner than point P1, by a user's dragging operation.

Subsequently, the image attribute/surface state recognizer 120 acquires surface state information of an image projection portion of the screen onto which an image is to be projected (S650). The image projection portion on the screen is changed in operation S640 as described above. In other words, the image may be projected onto portion D shown in FIG. 7.

The image generator 140 generates an image in conformity with the attribute changed in operation S640 (S660). In more detail, the image may be generated in conformity with the location, size and form changed in operation S640.

Subsequently, the image generator 140 processes the image generated in operation S660 based on the surface state information acquired in operation S650 (S670). Image processing in operation S670 may comprise color compensation and geometric compensation.

Then, the image projecting unit 150 projects the image processed in operation S670 onto the screen (S680). Therefore, it is possible to provide a user with the image which matches the attribute determined by the user and in which a distortion due to the surface state is compensated.

The process by which the user changes the attribute of the image through the pointing manipulation during the image projection has been described in detail according to the exemplary embodiment of the present invention.

The process of FIG. 2 is performed prior to projecting the image onto the screen, and the process of FIG. 6 is performed while the image is projected onto the screen in the exemplary embodiment of the present invention, but these processes are merely exemplary for convenience of description. Accordingly, the present invention is also applicable to a situation in which the process of FIG. 2 is performed while the image is projected onto the screen. In other words, it is possible to determine the attribute of the image using the methods shown in FIGS. 3 to 5 even when the image is being projected onto the screen.

As described above, the projector according to the exemplary embodiment of the present invention may project an image onto an inside wall of a building other than the screen. In addition, the projector may project an image onto other objects.

Additionally, the location, size and form of the image are merely exemplary for the attribute of the image. Accordingly, the present invention is also applicable to a situation in which a user sets and/or changes attributes of an image to be projected, for example the ratio, shape, brightness and focus of the image.

The methods for determining attributes of an image to be projected as shown in FIGS. 3 to 5 and 7 are merely exemplary, and accordingly it is possible to determine attributes of an image to be projected using methods other than those described above. For example, a user may set an area, which has a point specified through a pointing manipulation and is distinguished from other areas, as an image projection portion, or may change the image projection portion. In more detail, if a frame such as a picture frame is hung on an inside wall of a building and if a user indicates the inside of the frame through pointing manipulation, an image may be projected onto the inside of the frame.

Additionally, it is possible to determine the ratio of an image set by the user through the pointing manipulation as a ratio of an image to be projected. In this situation, the ratio of the image may be set using the method of specifying a diagonal line as shown in FIG. 4.

The constituents of the projector as shown in FIG. 1 may be omitted by function integration. For example, if the controller 130 is able to function as the image attribute/surface state recognizer 120, the image attribute/surface state recognizer 120 is not required.

Moreover, the present invention is also applicable to any apparatus capable of projecting an image other than the above-described projector. For example, the present invention is also applicable to a mobile phone having an image projection function.

As described above, according to an exemplary embodiment of the present invention, it is possible to determine an attribute of an image to be projected, through a user's manipulation performed on an image projection surface, and it is thus possible to set and/or change the attribute of the image, such as the location and size of a projected image, more conveniently and intuitively.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display method comprising:
determining an attribute of an image to be projected, according to a manipulation of a device performed by a user with respect to a predetermined object onto which the image is to be projected; and
projecting the image based on the determined attribute.

2. The display method as claimed in claim 1, wherein the determining determines at least one of a location, a form, a size, a ratio, a shape, a brightness and a focus of the image according to the manipulation.

3. The display method as claimed in claim 1 or 2, wherein the determining comprises at least one of:
1) determining a point specified by the user to be a center of the image to be projected;
2) determining a point specified by the user to be an edge of the image to be projected;
3) determining a shape specified by the user so that the image having the shape is projected;
4) determining an area, which has a point specified by the user and is distinguished from other areas, to be an area onto which the image is to be projected; and
5) determining a ratio set by the user to be a ratio of the image to be projected.

4. The display method as claimed in claim 1 or 2, wherein the manipulation is performed by the user on a pointer from which a beam is emitted onto the predetermined object.

5. The display method as claimed in claim 1, wherein the predetermined object is at least one of a screen and an inside wall of a building.

6. The display method as claimed in any one of claims 1 to 5, further comprising:
acquiring surface state information associated with a surface of a portion of the predetermined object onto which the image is to be projected,
wherein the projecting comprises:
generating an image according to the determined attribute;
processing the generated image based on the surface state information; and
projecting the processed image.

7. The display method as claimed in claim 6, wherein the processing of the image comprises color compensation and geometric compensation.

8. A display apparatus comprising:
a recognizer which determines an attribute of an image to be projected, according to a manipulation performed by a user on a device with respect to a predetermined object onto which the image is to be projected;
a generator which generates an image in conformity with the attribute determined by the recognizer; and
a projecting unit which projects the image generated by the generator.

9. The display apparatus as claimed in claim 8, wherein the recognizer determines at least one of a location, a form, a size, a ratio, a shape, a brightness and a focus of the image according to the manipulation.

10. The display apparatus as claimed in claim 8 or 9, wherein the recognizer determines the attribute of the image to be projected by at least one of determining a point specified by the user to be a center of the image to be projected, determining a point specified by the user to be an edge of the image to be projected, determining a shape specified by the user so that the image having the shape is projected, determining an area, which has a point specified by the user and is distinguished from other areas, to be an area onto which the image is to be projected, and determining a ratio set by the user to be a ratio of the image to be projected.

11. The display apparatus as claimed in claim 8 or 9, wherein the manipulation is performed by the user using a beam emitted from a pointer onto the predetermined object.

12. The display apparatus as claimed in claim 8, wherein the predetermined object is at least one of a screen and an inside wall of a building.

13. The display apparatus as claimed in any one of claims 8 to 12,
wherein the recognizer acquires surface state information associated with a surface of a portion of the predetermined object onto which the image is to be projected, and
wherein the generator generates an image according to the determined attribute, and processes the generated image based on the surface state information acquired by the recognizer.

14. The display apparatus as claimed in claim 13, wherein the image processing performed by the generator comprises color compensation and geometric compensation.
